# EUROPÄISCHE PATENTSCHRIFT

(11) **EP 3 879 547 B1**
(45) Veröffentlichungstag und Bekanntmachung des Hinweises auf die Patenterteilung: **03.01.2024**
(21) Anmeldenummer: 21160173.7
(22) Anmeldetag: 02.03.2021
(51) Int. Cl.: H01H 9/18, H01H 23/24, H02G 3/14, H01H 23/14, H01H 23/02, H01R 13/717, H01R 24/70

(54) **ELEKTRISCHES INSTALLATIONSGERÄT MIT INTEGRIERTER BELEUCHTUNG**
ELECTRICAL INSTALLATION DEVICE WITH INTEGRATED ILLUMINATION
APPAREIL D'INSTALLATION ÉLECTRIQUE À ÉCLAIRAGE INTÉGRÉ

(30) Priorität: 13.03.2020 DE 102020106885
(43) Veröffentlichungstag der Anmeldung: 15.09.2021
(73) Patentinhaber: Schneider Electric Industries SAS, 92500 Rueil-Malmaison (FR)
(72) Erfinder: Marovac, Avdu Milan, 51647 Gummersbach (DE); Önder, Mehmet, 51643 Gummersbach (DE)
(74) Vertreter: Herrmann, Jochen

(56) Entgegenhaltungen:
- EP-A1- 3 091 549
- EP-A2- 2 383 852
- EP-B1- 1 845 588
- DE-A1-102009 031 588
- DE-U1- 20 117 284

## Beschreibung

Die Erfindung betrifft ein elektrisches Installationsgerät mit einer integrierten Beleuchtungseinrichtung gemäß dem Oberbegriff von Anspruch 1.

Um Lichtschalter oder andere elektrische Installationsgeräte in der Dunkelheit besser auffinden zu können, sind elektrische Installationsgeräte mit einem Orientierungslicht bekannt.

Aus der EP 1 845 588 B1 ist eine Steckdose mit einem Beleuchtungselement bekannt, welches durch vier LED an der Unterseite des Gehäuses ausgeleuchtet wird. Dabei werden die Verbindungskontakte selbstständig beim mechanischen Verbinden mit dem Geräteeinsatz der Beleuchtungseinrichtung kontaktiert. Nachteilig an dieser Lösung ist jedoch, dass sie eine große Bautiefe für die Installation der Steckdose benötigt und kein gleichmäßiges Hinterleuchten der Steckdose ermöglicht.

Die DE 201 17 284 U1 offenbart einen Lichtschalter mit einem elektrolumineszierenden Blatt zwischen dem Rahmen und der Abdeckung. Dabei wird das elektrolumineszierende Blatt permanent durch eine elektrische Verbindung angeregt und strahlt somit Licht ab. Nachteilig an diese Lösung ist jedoch, dass es keine stabile Verbindung zwischen dem Sockel des Lichtschalters und dem Leuchtrahmen gibt, so dass diese Lösung nicht für Schalter nach Norm CE60 geeignet ist.

EP 2 008 291 B1 offenbart einen Lichtschalter mit einem Leuchtrahmen, welcher ein Hinterleuchten des Schalters zum einfachen Auffinden bei Dunkelheit ermöglicht. Dabei ist eine Steckerfassung in dem Sockel des Lichtschalters aufgenommen. Der Leuchtrahmen ist über einen Stecker mit der Steckerfassung verbunden. Durch die Anordnung der Steckerfassung in dem Sockel wird jedoch auch bei dieser Ausführungsform eine große Bautiefe für den Schalter benötigt.

Aus der EP 1 610 422 B1 ist eine Steckdose mit einem Beleuchtungselement bekannt, wobei das Beleuchtungselement über die Grundkontur des elektrischen Installationsgeräts hervorsteht.

Nachteilig an den aus dem Stand der Technik bekannten Lösungen ist jedoch, dass sie entweder eine hohe Bautiefe aufweisen und somit nur für tiefe Installationsbereiche geeignet sind, einen hohen Stromverbrauch und/oder eine geringe Betriebssicherheit aufweisen.

Der Erfindung liegt nun die Aufgabe zugrunde, ein elektrisches Installationsgerät bereitzustellen, welches sich durch einen bauraumoptimierten Aufbau auszeichnet und die aus dem Stand der Technik bekannten Nachteile überwindet.

Diese Aufgabe wird durch ein elektrisches Installationsgerät mit einem zur Wandmontage vorgesehenen Tragrahmen, einem an dem Tragrahmen befestigten Sockel, einer dem Tragrahmen vorgesetzten Aufnahmeschale und einem in der Aufnahmeschale aufgenommenen Lichtemissionselement gelöst. Das elektrische Installationsgerät umfasst ferner einen Rahmen, welcher das Lichtemissionselement an seiner der Aufnahmeschale abgewandten Fläche abdeckt. Die Aufnahmeschale weist einen lichtdurchlässigen Bereich aufweist, um ein Hinterleuchten des elektrischen Installationsgerätes zu ermöglichen. Dabei ist es vorgesehen, dass eine erste Kontaktzone eines Übertragungselements elektrisch leitend kontaktiert oder kontaktierbar ist, und wobei das Übertragungselement mit einer zweiten Kontaktzone elektrisch leitend mit dem Lichtemissionselement verbunden ist.

Vorzugsweise wird die Kontaktierung dabei so vorgenommen, dass der Sockel elektrisch leitend mit der ersten Kontaktzone des Übertragungselements verbunden ist, wobei das Übertragungselement mit der zweiten Kontaktzone elektrisch leitend mit dem Lichtemissionselement verbunden ist.

Erfindungsgemäß ist dabei vorgesehen, dass das Übertragungselement an dem Tragrahmen befestigt ist, wobei das Übertragungselement einen ersten Bauteilabschnitt und einen zweiten Bauteilabschnitt aufweist, wobei der Tragrahmen zwischen dem ersten Bauteilabschnitt und dem zweiten Bauteilabschnitt des Übertragungselements aufgenommen ist. Das Übertragungselement kann dabei beispielsweise seitlich auf den Tragrahmen aufgesteckt werden. Gemäß einer denkbaren Erfindungsvariante kann es dabei vorgesehen sein, dass der erste und der zweite Bauteilabschnitt seitlich den, insbesondere als Blechzuschnitt ausgebildeten, Tragrahmen umgreifen. Hierdurch gelingt eine einfache und zuverlässige Montage. Denkbar ist es auch, dass das Übertragungselement nicht seitlich, sondern von hinten oder auch von vorne auf den Tragrahmen aufgesteckt wird.

Für die Befestigung des Übertragungselements an dem Tragrahmen kann insbesondere eine form- oder kraftschlüssige Verbindung Verwendung finden, die zwischen dem Tragrahmen und zumindest einem der beiden Bauteilabschnitte wirksam ist. Denkbar ist insbesondere die Verwendung einer Rastverbindung.

Unter einem elektrischen Installationsgerät sind in diesem Zusammenhang insbesondere Lichtschalter, Steckdosen oder Kombieinheiten zu verstehen, welche mindestens einen Lichtschalter und eine Steckdose umfassen. Weitere erfindungsgemäße Ausführungen von elektrischen Installationsgeräten sind beispielsweise Dimmer, Jalousieschalter sowie vielfältige Bedienelemente, Aktoren, Sensoren, oder Displayeinheiten von elektrischen Installationsprogrammen. Das vorgeschlagene elektrische Installationsgerät ermöglich eine kostengünstige und bauraumoptimierte Ausführung eines elektrischen Installationsgerätes, welches insbesondere keine tiefen Wandlöcher benötigt, wobei der Rahmen gleichmäßig und flackerfrei hinterleuchtet wird, um das elektrische Installationsgerät bei Dunkelheit einfach und schnell auffinden zu können. Zudem ist es laut Norm verboten, dass entfernbare Geräteelemente von elektrischen Installationsgeräten, beispielweise Blenden, Schaltwippen, Abdeckplatten, Bedienelemente, Anzeigeelemente o.ä. , die ein elektrisches Element aufweisen, mittels Kabeln mit spannungsführenden Bauelementen des Sockels des Installationsgerätes verbunden sind. Durch die erfindungsgemäße Lösung ist es nun möglich, auch bei Schaltern nach Norm CE 60 ein Hinterleuchten des elektrischen Installationsgerätes zu ermöglichen.

Durch die in den abhängigen Ansprüchen aufgeführten Merkmale sind vorteilhafte Verbesserungen und Weiterentwicklungen des im unabhängigen Anspruch aufgeführten elektrischen Installationsgerätes möglich.

In bevorzugter Ausgestaltung der Erfindung ist vorgesehen, dass der Sockel mittels vorzugsweise flexibler Stromführungselemente elektrisch mit dem Übertragungselement verbunden ist und dass das Übertragungselement mittels vorzugsweise starrer Stromführungselemente elektrisch mit dem Lichtemissionselement verbunden ist oder dass ein vorzugsweise flexibles Stromführungselement in den Sockel eingeführt oder einführbar und mit dem Übertragungselement mittelbar oder unmittelbar verbunden ist. Dadurch kann eine besonders stabile und betriebssichere elektrische Ankoppelung des Lichtemissionselements an das Übertragungselement erreicht werden, sodass die Bedingungen der Norm CE60 auf einfache und kostengünstige Art und Weise erfüllt werden.

In einer vorteilhaften Ausführungsform des elektrischen Installationsgerätes ist vorgesehen, dass das Übertragungselement als ersten Bauteilabschnitt eine Trägerplatte und als zweiten Bauteilabschnitt ein Halteelement umfasst, mit welchen das Übertragungselement mit dem Tragrahmen verbindbar ist, wobei der Tragrahmen formschlüssig oder kraftschlüssig zwischen dem Halteelement und der Trägerplatte des Übertragungselements aufgenommen ist. Dadurch kann eine besonders stabile und betriebssichere Verbindung zwischen dem Übertragungselement und der Trägerplatte hergestellt werden.

Vorzugsweise ist das Übertragungselement mittels einer Rastverbindung mit dem Tragrahmen verbunden. Dadurch kann das Übertragungselement in einer definierten Position zu dem Tragrahmen angebracht werden und ist gegen ein unbeabsichtigtes Verschieben bei der weiteren Montage oder Demontage des elektrischen Installationsgerätes gesichert. Alternativ kann das Übertragungselement auch mittels einer Klemmverbindung mit dem Tragrahmen verbunden werden. Dies ermöglicht eine besonders einfache Montage oder Demontage des Übertragungselements. Vorzugsweise ist das Übertragungselement seitlich auf den Tragrahmen des elektrischen Installationsgerätes aufgeschoben. Dabei ist der Tragrahmen bevorzugt als ein Blechteil, insbesondere als ein mittels eines Stanzverfahren hergestellten Blechteils ausgeführt.

In weiterer bevorzugter Ausgestaltung der Erfindung ist vorgesehen, dass das Übertragungselement Kontaktierungselemente aufweist, welche die erste Kontaktzone und die zweite Kontaktzone aufweisen, wobei ein Übergangsbereich zwischen der ersten Kontaktzone und der zweiten Kontaktzone durch ein elektrisch nicht leitendes Isolationsmaterial ummantelt ist. Dadurch kann auf einfache und kostengünstige Art und Weise ein Übertragungselement hergestellt werden, welches zur Erfüllung der Norm eine kabelfreie Verbindung zwischen dem Übertragungselement und dem Lichtemissionselement herstellt, sodass die in dem Gehäuse des elektrischen Installationsgerätes verlaufenden elektrischen Ströme sicher beherrscht werden können und die Gefahr eines elektrischen Kurzschlusses und einer damit verbundenen hohen elektrischen Spannung auf dem Kontaktbereich des elektrischen Installationsgerätes betriebssicher verhindert werden kann. Vorzugsweise ist das Isolationsmaterial durch ein Kunststoff-Spritzgussverfahren auf den Grundträger des Übertragungselements aufgebracht, wodurch eine besonders stabile und kostengünstige Ummantelung des Kontaktierungselements hergestellt werden kann. Zudem kann dadurch das Übertragungselement durch einen einfachen und kostengünstigen Fertigungsprozess hergestellt werden. Darüber hinaus ist eine betriebssichere Isolation möglich, da durch einen Spritzgussprozess eine stoffschlüssige Verbindung möglich ist, über welche insbesondere im Vergleich zu Steckverbindungen oder Kabelverbindungen vergleichsweise hohe Kräfte übertragen werden können.

Besonders bevorzugt ist dabei, wenn das Übertragungselement zwei Kontaktierungselemente aufweist, wobei beide Kontaktierungselemente von einem gemeinsamen Spritzgussteil ummantelt sind. Dadurch kann auf einfache Art und Weise die Positionierung der beiden Kontaktierungselement relativ zu der Trägerplatte des Übertragungselements erreicht werden.

In einer bevorzugten Ausgestaltung des elektrischen Installationsgerätes ist vorgesehen, dass die erste Kontaktzone zur Ausbildung einer Crimpverbindung eingerichtet ist. Dadurch kann ein elektrisches Kabel auf einfache Weise mit dem Übertragungselement verbunden werden. Dabei ist die erste Kontaktzone gegenüber dem Grundträger und dem Isolationsmaterial derart freigestellt, dass auf einfache Art und Weise ein Schließen des Crimpkontaktes und somit eine dauerhafte Verbindung mit dem Kabel möglich ist.

In einer weiteren Verbesserung der Erfindung ist vorgesehen, dass die zweite Kontaktzone in einer Ausnehmung des Isolationsmaterials angeordnet ist, wobei die zweite Kontaktzone gegenüber einer Oberfläche des Isolationsmaterials zurückgesetzt ist. Durch das Zurücksetzen der zweiten Kontaktzone gegenüber einer Oberfläche des Isolationsmaterials kann ein unerwünschter Kontakt mit der zweiten Kontaktzone verhindert werden. Dabei wird insbesondere bei der Montage oder Demontage des elektrischen Installationsgerätes verhindert, dass die Person, welche eine solche Montage oder Demontage vornimmt, mit dem Finger an den zweite Kontaktzone gelangt.

In einer vorteilhaften Ausgestaltung des elektrischen Installationsgerätes ist vorgesehen, dass an dem Halteelement und/oder an der Trägerplatte eine Öffnung ausgebildet ist und an dem Isolationsmaterial ein Dom ausgebildet ist, wobei der Dom formschlüssig in der Öffnung aufgenommen ist. Dadurch kann eine Sicherung geschaffen werden, welche beim Einrasten der Dome in die Öffnungen eine formschlüssige Verbindung zwischen dem Tragrahmen und dem Übertragungselement herstellt. Somit kann sichergestellt werden, dass sich das Übertragungselement dauerhaft nicht gegenüber dem Tragrahmen verschiebt.

In einer vorteilhaften Ausgestaltung der Erfindung ist vorgesehen, dass an dem Lichtemissionselement elektrische Übertragungskontakte ausgebildet sind, welche mit der zweiten Kontaktzone des Übertragungselement elektrisch leitend verbunden und vorzugsweise federvorgespannt an diese angedrückt sind. Dadurch kann auf einfache und funktionssichere Art und Weise eine elektrische Kontaktierung des Lichtemissionselements erfolgen. Dabei kann insbesondere eine werkzeugfrei reversible lösbare Verbindung zwischen dem Übertragungselement und dem Lichtemissionselement hergestellt werden, wobei bei einer Demontage des elektrischen Installationsgerätes der Stromfluss unterbrochen wird, wenn die Übertragungskontakte nicht mehr gegen die zweite Kontaktzone des Übertragungselements gedrückt werden.

Gemäß einer vorteilhaften Ausführungsform des elektrischen Installationsgerätes ist vorgesehen, dass der Sockel über ein flexibles Kabel mit dem Übertragungselement verbunden ist. Dadurch ist eine einfache Verbindung zwischen dem Sockel und dem Übertragungselement möglich. Die Crimpkontakte an dem Übertragungselement können durch flexible Kabel auf einfache Art dauerhaft mit dem Sockel des elektrischen Installationsgerätes verbunden werden.

Bevorzugt ist dabei, wenn das flexible Kabel einen ersten Kabelabschnitt und einen zweiten Kabelabschnitt aufweist, wobei zwischen dem ersten Kabelabschnitt und dem zweiten Kabelabschnitt ein elektrisches Widerstandsbauteil zur Begrenzung der durch das Übertragungselement fließenden Stromstärke angeordnet ist. Durch ein elektrisches Widerstandsbauteil kann die Stromstärke, welche durch das elektrische Installationsgerät fließt, auf einfache Art und Weise begrenzt werden, wobei insbesondere auch eine kompakte Bauweise eingehalten wird. Dadurch kann auf einen Transformator zur Herabsetzung der Spannung für das Übertragungselement verzichtet werden. Somit können die Kosten für das elektrische Installationsgerät verringert werden. Ferner können durch das elektrische Widerstandsbauteil die im Übertragungselement fließenden elektrischen Ströme derart begrenzt werden, dass Beharrungsberührungsströme bei Wechselstrom unterhalb der maximal zulässigen Obergrenze von 3,5 mA liegen.

Besonders bevorzugt ist dabei, wenn das elektrische Widerstandsbauteil einen elektrischen Widerstand von mindestens 65 Kiloohm aufweist. Bei einer angenommenen Wechselspannung von 230V führt ein Widerstand von 65 Kiloohm dazu, dass ein maximal zulässiger Grenzstrom von 3,5 mA nicht überschritten wird. Somit führt auch ein Fehlerstrom nicht zu einer unzulässigen Belastung der Oberflächen des elektrischen Installationsgerätes, wodurch eine besonders hohe Betriebssicherheit erreicht wird.

Unter der Annahme einer maximalen Netzspannung von 250V und einem Sicherheitsfaktor von 1,1 wird die vorherstehende Sicherheitsbedingung bezüglich eines maximal zulässigen Beharrungsberührungsstrom von 3,5 mA betriebssicher erfüllt, wenn das Widerstandsbauteil gemäß einer Erfindungsvariante einen elektrischen Widerstand von mindestens 80 Kiloohm aufweist.

In einer bevorzugten Ausgestaltung des elektrischen Installationsgerätes ist vorgesehen, dass das Lichtemissionselement einen Lichtleitrahmen und ein Beleuchtungselement umfasst. Durch einen Lichtleitrahmen kann mit einem einfachen Beleuchtungselement ein gleichmäßiges Ausleuchten des elektrischen Installationsgerätes erreicht werden. Dabei wird das Licht der Beleuchtungsquelle auf geeignete Art und Weise in den Lichtleitrahmen eingekoppelt und von dort emittiert. Dazu können an dem Lichtleitrahmen entsprechende Prismen, Spiegel oder Umleitelemente ausgebildet oder angeordnet sein, um die Lichtemission gleichmäßig über den kompletten Lichtleitrahmen zu gestalten.

Bevorzugt ist dabei, wenn das Beleuchtungselement eine Leiterplatte und mindestens eine auf der Leiterplatte angeordnete Lichtquelle aufweist. Dadurch ist eine besonders einfache Ansteuerung des Lichtemissionselements möglich. Dabei kann die Steuerung der Lichtquelle in der Leiterplatte implementiert sein, sodass der Stromfluss zu der Lichtquelle gesteuert werden kann.

Besonders bevorzugt ist dabei, wenn die mindestens eine Lichtquelle eine LED oder eine OLED ist. LED oder OLED weisen aufgrund ihrer geringen Baugröße und ihres geringen Stromverbrauchs Vorteile auf bei der Verwendung in einem solchen elektrischen Installationsgerät. Insbesondere können LEDs oder OLEDs aufgrund ihrer geringen Baugröße auf einfache Art und Weise in die Leiterplatte integriert werden, wodurch ein besonders flaches Beleuchtungselement ausgeführt werden kann. Bevorzugt sind mehrere LEDs oder OLEDs auf der Leiterplatte angeordnet, um die Ausleuchtung des Lichtleitrahmens zu optimieren. Da das elektrische Installationsgerät dauerhaft beleuchtet ist, kann durch die Auswahl der Lichtquelle signifikant Einfluss auf den Stromverbrauch des elektrischen Installationsgerätes Einfluss genommen werden. Dabei zeichnen sich LED und OLED bei vergleichsweise hoher Lichtstärke durch einen geringen Stromverbrauch aus. Die vorgenannten Lichtquellen können für eine kompakte Bauweise als SMD-Bauteile ausgebildet sein.

Alternativ kann die Stromzufuhr auch in Abhängigkeit von weiteren Parametern, beispielsweise durch einen Smart-Home-Steuerung, gesteuert werden, sodass anstelle einer dauerhaften Beleuchtung des elektrischen Installationsgerätes eine selektive Ansteuerung des Beleuchtungselements erfolgt. So kann insbesondere bei starker Sonneneinstrahlung, längerer Abwesenheit oder auf Benutzerwunsch das Hinterleuchten des elektrischen Installationsgerätes ausgeschaltet werden, wodurch der Stromverbrauch weiter reduziert werden kann.

In einer vorteilhaften Ausführungsform der Erfindung ist vorgesehen, dass an dem Beleuchtungselement eine Aufnahmeöffnung ausgebildet ist, in welcher ein an dem Lichtleitrahmen ausgebildeter Vorsprung, insbesondere ein Aufnahmestift, aufnehmbar ist. Dadurch ist eine exakte Positionierung der Lichtleitrahmens relativ zu dem Beleuchtungselement möglich. Dies erleichtert das Einkoppeln von Licht in den Lichtleitrahmen und somit die Lichtausbeute. Dadurch kann ein besonders effizientes und gleichmäßiges Hinterleuchten des elektrischen Installationsgerätes erreicht werden.

Alternativ oder zusätzlich ist mit Vorteil vorgesehen, dass an dem Lichtleitrahmen eine Aufnahmeöffnung ausgebildet ist, in welcher ein an dem Beleuchtungselement ausgebildeter Vorsprung, insbesondere ein Aufnahmestift, aufnehmbar ist. Hierdurch wird ebenfalls eine exakte Positionierung der beiden Komponenten zueinander ermöglicht, wodurch eine ideale Ausleuchtung erreicht werden kann.

Alternativ ist mit Vorteil vorgesehen, dass das Lichtemissionselement als Flächenleuchte, insbesondere als LED oder als OLED ausgebildet ist. Durch die Verwendung einer Flächenleuchte als Lichtemissionselement kann auf die Kombination eines Beleuchtungselements und eines Lichtleitrahmens verzichten werden. Somit kann die Anzahl der Bauteile reduziert werden. Aufgrund der höheren mechanischen Festigkeit und der höheren Dauerhaltbarkeit wird jedoch eine Kombination aus einem Beleuchtungselement und einem Lichtleitrahmen als Lichtemissionselement bevorzugt.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Gleiche Bauteile oder Bauteile mit gleicher Funktion sind dabei in den unterschiedlichen Figuren mit den gleichen Bezugsziffern gekennzeichnet. Es zeigen:
Figur 1 ein erfindungsgemäßes elektrisches Installationsgerät in einer Schnittdarstellung;
Figur 2 einen an einem Tragrahmen befestigten Sockel und ein Übertragungselement eines erfindungsgemäßen elektrischen Installationsgerätes;
Figur 3 ein elektrisches Installationsgerät in einer Explosionsdarstellung;
Figur 4 eine weitere Explosionsdarstellung eines elektrischen Installationsgerätes;
Figur 5 ein Übertragungselement und ein Beleuchtungselement in einer ersten Ansicht;
Figur 6 ein Übertragungselement und ein Beleuchtungselement in einer zweiten Ansicht;
Figur 7 ein Übertragungselement in einer dreidimensionalen Darstellung;
Figur 8 verschiedene Ausführungsformen von erfindungsgemäßen elektrischen Installationsgeräten.

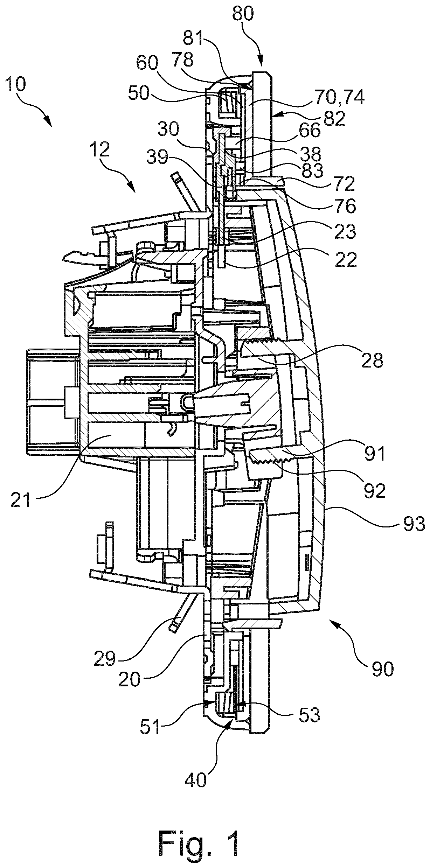

Fig.1 zeigt ein erfindungsgemäßes elektrisches Installationsgerät 10 in Form eines Lichtschalters 12. Das elektrische Installationsgerät 10 umfasst ein zur Wandmontage vorgesehenen Tragrahmen 20. An dem Tragrahmen 20 ist ein Sockel 21 zur Stromversorgung des elektrischen Installationsgerätes 10 befestigt. Dem Tragrahmen 20 ist eine Aufnahmeschale 40 vorgesetzt, in welcher ein Lichtemissionselement 50 aufgenommen ist. Das elektrische Installationsgerät 10 umfasst ferner einen Rahmen 70, welcher das Lichtemissionselement 50 an seiner der Aufnahmeschale 40 abgewandten Stirnfläche 53 abdeckt. Die Aufnahmeschale 40 weist einen lichtdurchlässigen Bereich auf, um ein Hinterleuchten des elektrischen Installationsgerätes 10 zu ermöglichen. Der Sockel 21 ist elektrisch leitend mit einer ersten Kontaktzone 39 eines Übertragungselements 30 verbunden. Das Übertragungselement 30 ist mit einer zweiten Kontaktzone 38 elektrisch leitend mit dem Lichtemissionselement 50 verbunden. Das Übertragungselement 30 ist an dem Tragrahmen 20 befestigt, wobei das Übertragungselement 30 einen ersten Bauteilabschnitt und einen zweiten Bauteilabschnitt aufweist, zwischen denen der Tragrahmen 20 aufgenommen ist. Das elektrische Installationsgerät 10 weist ferner eine Abdeckblende 80 auf, welche mit einer ersten Stirnseite 81 an dem Rahmen 70 anliegt. Dabei ist eine Zentralöffnung 83 der Abdeckblende 80 auf einem Unterstützungsrahmen 72 aufgenommen.

Das elektrische Installationsgerät 10 weist ferner ein Betätigungselement 90 auf. Das Betätigungselement 90 umfasst eine Bedienfläche 93, und ein Befestigungselement 91, welches mit einer Verrastung 92 an einer Schalterwippe 28 des Sockels 21 fixiert ist.

An dem Tragrahmen 20 sind Sperrhaken 29 ausgebildet, um den Tragrahmen 20 bei einer Wandmontage in einer Ausnehmung der Wand zu befestigen. An dem Sockel 21 ist ein elektrisches Kontaktierungselement 22 ausgebildet, in welchem ein mit dem Übertragungselement 30 elektrisch leitend verbundenes Kabel 23 aufgenommen ist. Dazu ist an dem Übertragungselement 30 eine erste Kontaktzone 39 ausgebildet, an welcher das Kabel 29 mit dem Übertragungselement 30, vorzugsweise mittels einer Crimpverbindung, verbunden ist.

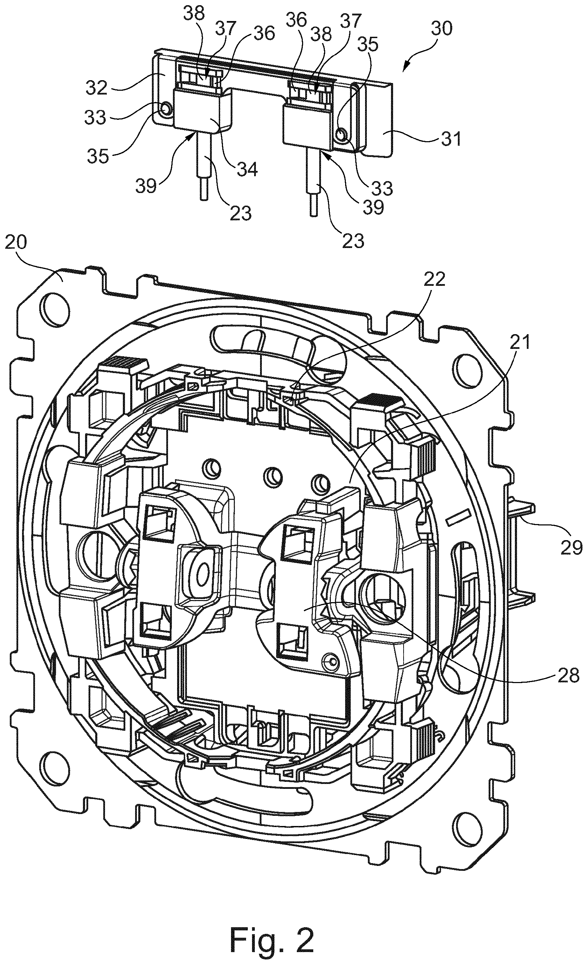

In Fig. 2 sind der Tragrahmen 20, der am Tragrahmen 20 befestigte Sockel 21 sowie das Übertragungselement 30 dargestellt. Der Sockel 21 umfasst die Schalterwippe 28, mit welcher ein Stromkreis geöffnet oder geschlossen werden kann. Insbesondere kann durch die Schalterwippe 28 eine Beleuchtungseinrichtung einund ausgeschaltet werden. Der Tragrahmen 29 weist die Sperrhaken 29 auf, mit welcher der Tragrahmen 20 in einer Ausnehmung einer Wand arretiert werden kann. Gut erkennbar ist an dem Sockel 21 ferner das elektrische Kontaktierungselement 22 ausgebildet, mit welchem das Übertragungselement 30 über Kabel 23 verbindbar ist.

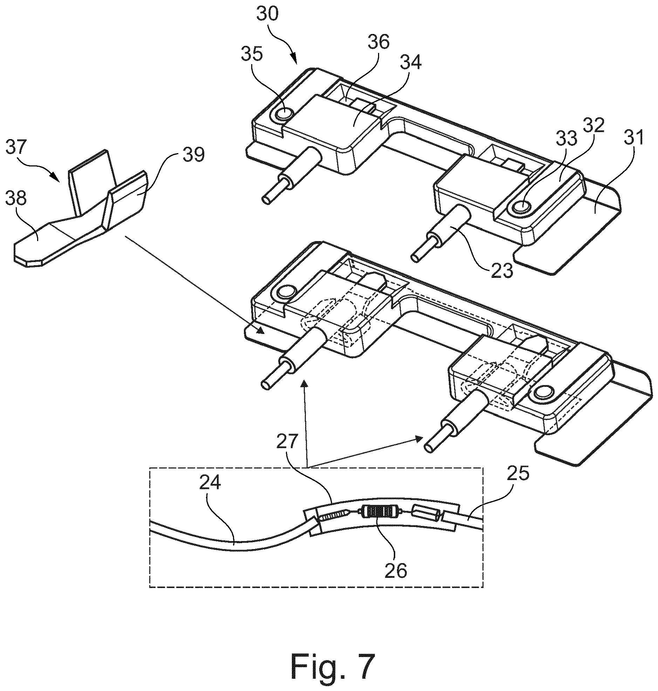

Das Übertragungselement 30 umfasst eine Trägerplatte 31 und an der Trägerplatte 31 angeformte Halteelemente 32. Das Übertragungselement 30 umfasst ferner zwei elektrische Kontaktierungselemente 37, welche jeweils einen erste Kontaktzone 39 und eine zweite Kontaktzone 38 aufweisen. Die erste Kontaktzone 39 und die zweite Kontaktzone 38 sind durch ein Isolationsmaterial 34 räumlich voneinander getrennt. Dabei wird ein Kabel 23 an der ersten Kontaktzone 39 vorzugsweise mittels einer Crimpverbindung mit dem Kontaktierungselement 37 verbunden (siehe Figur 7). Die zweite Kontaktzone 38 ist gegenüber einer Oberfläche des Isolationsmaterials 34 zurückversetzt. Dabei sind an dem Isolationsmaterial 34 Ausnehmungen 36 vorgesehen, um die zweite Kontaktzone 38 elektrisch zu kontaktieren. Die Ausnehmungen 36 sind vorzugsweise so dimensioniert, dass der Finger eines Benutzers bei Berührung des Isoliermaterials nicht die zweite Kontaktzone 38 berühren kann.

An den Halteelementen 32 sind Öffnungen 33 ausgebildet, in welche an dem Isolationsmaterial 34 ausgebildete Dome 35 formschlüssig aufgenommen sind. Somit kann das Übertragungselement 30 an dem Tragrahmen 20 formschlüssig aufgenommen, beispielsweise verrastet werden.

Das Übertragungselement 30 wird seitlich auf den metallischen Rahmen des Tragrahmens 20 aufgesteckt und an diesem fixiert. Dabei federn die Halteelemente 32 zurück und ermöglichen ein Aufschieben auf den Tragrahmen. Formschlußelemente des Übertragungselements 30 liegen in der Montagestellung derart an Formschluß-Gegenelementen des Tragrahmens 20 an, dass eine Verschiebung quer zur Steckbewegung sicher verhindert ist.

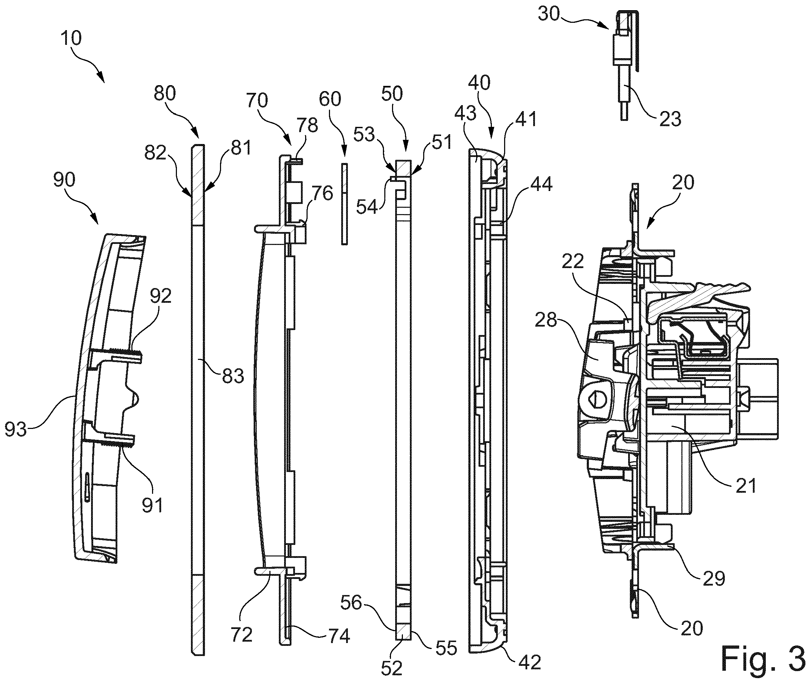

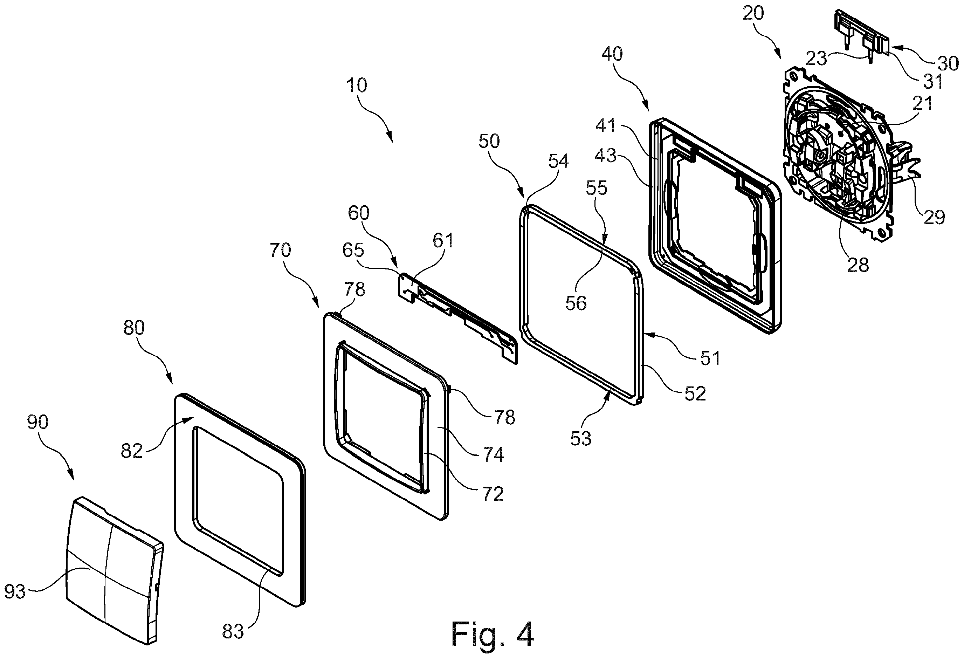

In den Fig. 3 und 4 ist das elektrische Installationsgerät 10 in einer Explosionsdarstellung gezeigt. Auch in diesem Ausführungsbeispiel ist das elektrische Installationsgerät 10 als Lichtschalter 12 ausgeführt. Das elektrische Installationsgerät 10 weist einen in Fig. 2 gezeigten Tragrahmen 20 und einen Sockel 21 auf. Seitlich auf den Tragrahmen 20 wird ein Übertragungselement 30 aufgesteckt, welches über Kabel 23 mit einem elektrischen Kontaktierungselement 22 an dem Sockel 21 verbunden ist.

An dem Tragrahmen 20 ist eine Aufnahme für eine Aufnahmeschale 40 ausgebildet. Die Aufnahmeschale 40 weist einen Vertiefung 41 zur formschlüssigen Aufnahme eines Lichtemissionselements 50, insbesondere eines Lichtleitrahmens 52 auf. Die Aufnahmeschale 40 besitzt eine Abstrahlfläche 42, an welcher das Licht des Lichtemissionselements 50 durch die Aufnahmeschale 40 austreten kann. Die Abstrahlfläche 42 ist vorzugsweise aus einem durchsichtigen oder lichtdurchlässigen Kunststoffmaterial ausgeführt. Alternativ oder zusätzlich können in der Abstrahlfläche 42 auch Öffnungen ausgebildet sein.

Die Aufnahmeschale 40 weist ferner eine Aufnahme 43 auf, mit welcher ein Rahmen 70 zu der Aufnahmeschale 40 zentriert und in dieser aufgenommen werden kann. Die Aufnahmeschale 40 weist ferner einen Aufnahmebereich 44 auf, an welchem das Übertragungselement 30 in der Aufnahmeschalte 40 aufgenommen ist.

Das Lichtemissionselement 50 umfasst ein Beleuchtungselement 60 und einen Lichtleitrahmen 52. Der Lichtleitrahmen 52 weist eine erste Stirnfläche 51 auf, welcher der Vertiefung 41 in der Aufnahmeschale 40 zugewandt ist. Diese erste Stirnfläche 51 bildet zugleich eine Abstrahlfläche 55 des Lichtleitrahmens. Der Lichtleitrahmen 52 weist ferner eine zweite Stirnfläche 53 auf, in welche eine Einkoppelfläche für das Licht des Beleuchtungselements 60 darstellt. Ferner sind an dem Lichtleitrahmen 52 Vorsprünge, insbesondere Aufnahmestifte 54, ausgebildet, um den Lichtleitrahmen 52 exakt zu dem Beleuchtungselement 60 positionieren zu können und in dieser Position zu fixieren.

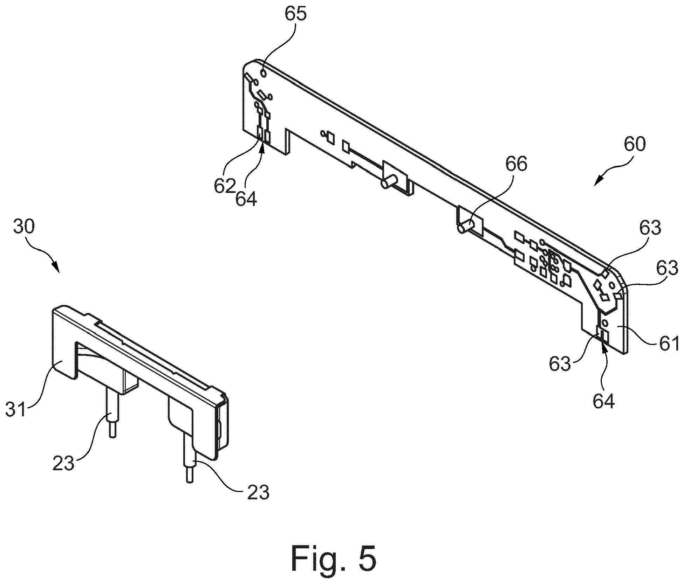

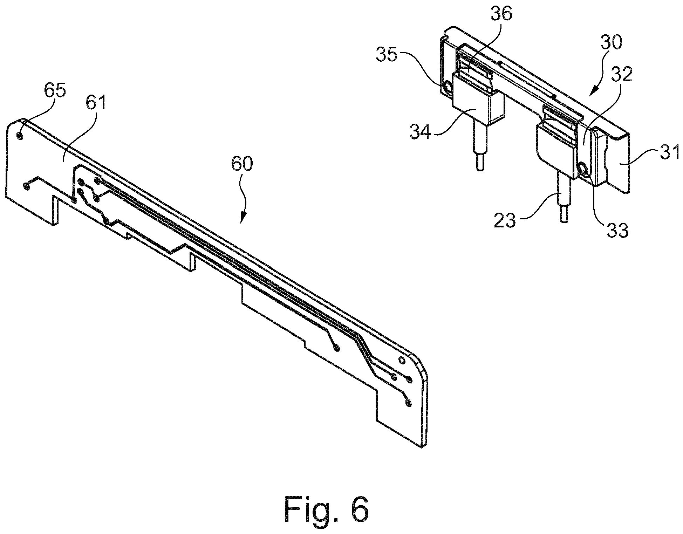

Das Beleuchtungselement 60 wird nachfolgend in Fig. 5 und Fig. 6 näher beschrieben. Das Beleuchtungselement 60 umfasst eine Leiterplatte 61, auf welcher mindestens eine Lichtquelle 62, vorzugsweise mehrere Lichtquellen, angeordnet sind. Die Lichtquellen 62 sind vorzugsweise als LED 63 oder OLED ausgeführt, welche sich bauraumoptimiert in die Leiterplatte 61, vorzugsweise als SMD-Bauteil, integrieren lassen. Ferner ist an dem Beleuchtungselement 60 eine Lichtemissionsfläche 64 ausgebildet, mit welcher das Licht der Lichtquelle 62 in den Lichtleitrahmen 52 einkoppelbar ist.

An dem Beleuchtungselement 60 sind Aufnahmeöffnungen 65 ausgebildet, in welchen die Aufnahmestifte 54 des Lichtleitrahmens 52 aufgenommen sind. Ferner können an dem Beleuchtungselement 60 Übertragungskontakte 66 ausgebildet sein, welche eine elektrische Verbindung des Beleuchtungselements 60 mit der zweiten Kontaktzone 38 des Übertragungselements 30 herstellen.

Wie die Figuren 3 und 4 weiter zeigen, umfasst der Rahmen 70 einen Unterstützungsrahmen 72, an welchem die Abdeckblende 80 mit ihrer Zentralöffnung 83 aufgenommen ist. Der Rahmen 70 umfasst ferner einen Abdeckabschnitt 74, welcher den Lichtleitrahmen 52 an seiner dem Sockel 21 abgewandten Seite überdeckt. An dem Rahmen 70 können Führungsabschnitte 78 ausgebildet sein, mit welchem der Rahmen 70 an der Aufnahme 43 der Aufnahmeschale 40 ausgerichtet ist. Der Rahmen 70 besitzt ferner Rastelemente 76 auf, mit welchen er mit dem Lichtemissionselement zur Bildung einer Baueinheit verrastet ist.

Die Abdeckblende 80 weist eine dem Rahmen 70 zugewandte erste Stirnseite 81 und eine dem Bediener zugewandte zweite Stirnseite 82 auf. Die Abdeckblende 80 weist ferner eine zentrische Öffnung 83 auf, mit welcher die Abdeckblende 80 auf dem Unterstützungsrahmen 72 des Rahmens 70 aufgenommen ist. Die Abdeckblende 80 kann beispielsweise mit dem Rahmen 70 verklebt oder verrastet sein.

Das Betätigungselement 90 weist eine Bedienfläche 93 und mindestens ein der Bedienfläche 93 abgewandtes Befestigungselement 91 auf. Das Befestigungselement 91 wird mittels einer Verrastung 92 an der Schalterwippe 28 des Lichtschalters 12 befestigt.

Fig. 5 und Fig. 6 zeigen das Übertragungselement 30 sowie das Beleuchtungselement 60 in einer Detaildarstellung. Dabei ist zu erkennen, dass die Lichtquellen 62 als LED 63 in den Randbereichen der Leiterplatte 61 angeordnet sind, um eine Einkopplung des Lichtes in den Lichtleitrahmen 52 zu optimieren.

Fig. 7 zeigt das Übertragungselement 30 in einer Detaildarstellung. Das Übertragungselement 30 weist eine Trägerplatte 31 auf, an welcher zwei gebogene Halteelemente 32 angeformt sind. Die Halteelemente 32 weisen jeweils einen Öffnung 33 auf, in welcher ein an dem Isolationsmaterial 34 ausgebildeter Dom 35 formschlüssig aufgenommen ist.

Ferner ist in Figur 7 die Ausgestaltung der Kontaktierungselemente 37 deutlich zu erkennen. Die Kontaktierungselemente 37 weisen einen erste Kontaktzone 39 auf, welche als Crimpkontakt zur Fixierung eines stromführenden Kabels 23 ausgebildet ist. Die Kontaktierungselement 37 weisen ferner eine zweite Kontaktzone 38 auf, welche als Kontaktzunge ausgebildet ist, um mit den federelastischen Übertragungskontakten 66 des Beleuchtungselements 60 in Wirkverbindung zu treten.

Das Kabel 23 weist einen ersten Kabelabschnitt 24 und einen zweiten Kabelabschnitt 25 auf, zwischen denen ein elektrisches Widerstandselement 26 angeordnet ist. Das elektrische Widerstandselement 26 ist vorzugsweise mit jeweils einem Ende der Kabelabschnitte 24, 25 verlötet. Um die Verbindungsstellen zwischen den Kabelabschnitten 24 und dem Widerstandselement zu isolieren ist ein Schrumpfschlauch 27 vorgesehen, welcher auf diesen Bereich aufgezogen und dann auf das Kabel 23 aufgeschrumpft wird.

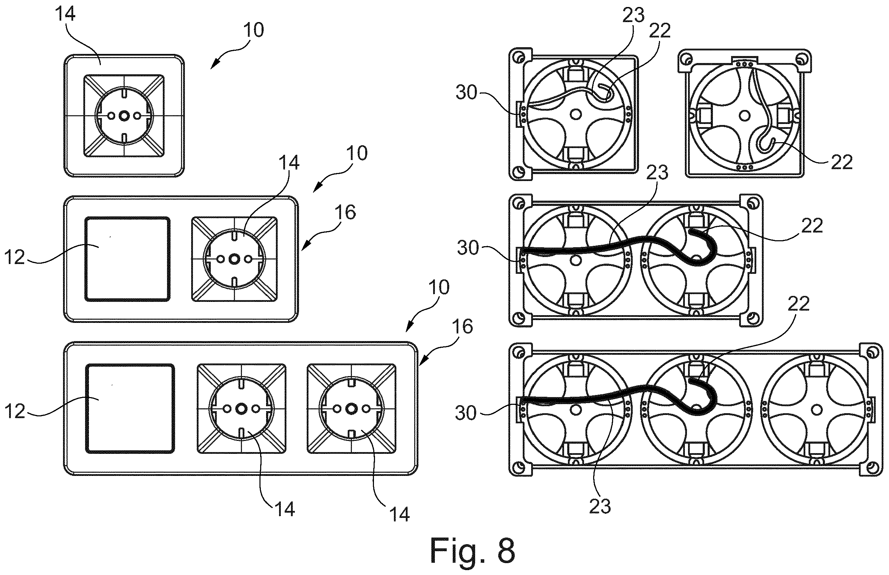

In Fig. 8 sind unterschiedliche Ausführungsformen von erfindungsgemäßen elektrischen Installationsgeräten 10 dargestellt. Die elektrischen Installationsgeräte 10 können jeweils eine oder mehrere Funktionseinheiten aufweisen. Diese Funktionseinheiten sind insbesondere Lichtschalter 12 oder Steckdosen 14. Ferner kann das elektrische Installationsgerät 10 als Kombieinheit 16 mit einem Lichtschalter 12 und einer Steckdose 14 ausgeführt sein. In Figur 8 sind ferner die Anordnung des elektrischen Kontaktierungselements 22, der Kabel 23 sowie des jeweiligen Übertragungselements 30 dargestellt. Wie die Zeichnungen erkennen lassen, kann das Kabel 23 insbesondere auch durch benachbarte Funktionseinheiten geschleift werden.

## Patentansprüche

1. Elektrisches Installationsgerät (10) mit einem zur Wandmontage vorgesehenen Tragrahmen (20), einem an dem Tragrahmen (20) befestigten Sockel (21), einer dem Tragrahmen (20) vorgesetzten Aufnahmeschale (40), einem in oder an der Aufnahmeschale (40) aufgenommenen Lichtemissionselement (50), sowie mit einem Rahmen (70), welcher das Lichtemissionselement (50) an seiner der Aufnahmeschale (40) abgewandten Fläche (53) zumindest bereichsweise abdeckt, wobei die Aufnahmeschale (40) einen lichtdurchlässigen Bereich aufweist, um ein Hinterleuchten des elektrischen Installationsgerätes (10) zu ermöglichen, wobei eine erste Kontaktzone (39) eines Übertragungselements (30) elektrisch leitend kontaktiert oder kontaktierbar ist, und wobei das Übertragungselement (30) mit einer zweiten Kontaktzone (38) elektrisch leitend mit dem Lichtemissionselement (50) verbunden ist, **dadurch gekennzeichnet, dass** das Übertragungselement (30) an dem Tragrahmen (20) befestigt ist, wobei das Übertragungselement (30) einen ersten Bauteilabschnitt und einen zweiten Bauteilabschnitt aufweist, wobei der Tragrahmen (20) zwischen dem ersten Bauteilabschnitt und dem zweiten Bauteilabschnitt des Übertragungselements (30) aufgenommen ist.

2. Elektrisches Installationsgerät (10) nach Anspruch 1, **dadurch gekennzeichnet, dass** der Sockel (21) mittels vorzugsweise flexibler Stromführungselemente elektrisch mit dem Übertragungselement (30) verbunden ist und dass das Übertragungselement (30) mittels vorzugsweise starrer Stromführungselemente elektrisch mit dem Lichtemissionselement (50) verbunden ist oder dass ein vorzugsweise flexibles Stromführungselement in den Sockel (21) eingeführt oder einführbar und mit dem Übertragungselement (30) mittelbar oder unmittelbar verbunden ist.

3. Elektrisches Installationsgerät (10) nach Anspruch 1 oder 2, **dadurch gekennzeichnet, dass** das Übertragungselement (30) als ersten Bauteilabschnitt eine Trägerplatte (31) und als zweiten Bauteilabschnitt ein Halteelement (32) umfasst, mit welchen das Übertragungselement (30) formschlüssig mit dem Tragrahmen (20) verbindbar ist, wobei der Tragrahmen (20) formschlüssig oder kraftschlüssig zwischen dem Halteelementen (32) und der Trägerplatte (31) des Übertragungselements (30) aufgenommen ist.

4. Elektrisches Installationsgerät (10) nach einem der Ansprüche 1 bis 3, **dadurch gekennzeichnet, dass** das Übertragungselement (30) Kontaktierungselemente (37) aufweist, welche die erste Kontaktzone (39) und die zweite Kontaktzone (38) aufweisen, wobei ein Übergangsbereich zwischen der ersten Kontaktzone (39) und der zweiten Kontaktzone (38) durch ein elektrisch nicht leitendes Isolationsmaterial (34) ummantelt ist.

5. Elektrisches Installationsgerät (10) nach Anspruch 4, **dadurch gekennzeichnet, dass** die erste Kontaktzone (39) zur Ausbildung einer Crimpverbindung eingerichtet ist.

6. Elektrisches Installationsgerät (10) nach Anspruch 4 oder 5, **dadurch gekennzeichnet, dass** die zweite Kontaktzone (39) in einer Ausnehmung (36) des Isolationsmaterials (34) angeordnet ist, wobei die zweite Kontaktzone (39) gegenüber einer Oberfläche des Isolationsmaterials (34) zurückgesetzt ist.

7. Elektrisches Installationsgerät (10) nach Anspruch 3 und Anspruch 4, **dadurch gekennzeichnet, dass** an dem Halteelement (32) eine Öffnung (33) ausgebildet ist und an dem Isolationsmaterial (34) ein Dom (35) ausgebildet ist, wobei der Dom (35) in der Öffnung (33) formschlüssig aufgenommen ist.

8. Elektrisches Installationsgerät (10) nach einem der Ansprüche 4 bis 7, wobei an dem Lichtemissionselement (50) elektrische Übertragungskontakte (66) ausgebildet sind, welche mit der zweiten Kontaktzone (39) des Übertragungselements (30) elektrisch leitend verbunden sind.

9. Elektrisches Installationsgerät (10) nach einem der Ansprüche 1 bis 8, **dadurch gekennzeichnet, dass** der Sockel (20) über ein flexibles Kabel (23) mit dem Übertragungselement (30) verbunden ist.

10. Elektrisches Installationsgerät (10) nach Anspruch 9, **dadurch gekennzeichnet, dass** das flexible Kabel (23) einen ersten Kabelabschnitt (24) und einen zweiten Kabelabschnitt (25) aufweist, wobei zwischen dem ersten Kabelabschnitt (24) und dem zweiten Kabelabschnitt (25) ein elektrisches Widerstandsbauteil (26) zur Begrenzung der Stromstärke (I) angeordnet ist.

11. Elektrisches Installationsgerät (10) nach Anspruch 10, **dadurch gekennzeichnet, dass** das elektrische Widerstandbauteil (26) einen elektrischen Widerstand (R) von mindestens 65 Kiloohm aufweist.

12. Elektrisches Installationsgerät (10) nach einem der Ansprüche 1 bis 11, **dadurch gekennzeichnet, dass** das Lichtemissionselement (50) einen Lichtleitrahmen (52) und ein Beleuchtungselement (60) umfasst.

13. Elektrisches Installationsgerät (10) nach Anspruch 12, **dadurch gekennzeichnet, dass** das Beleuchtungselement (60) eine Leiterplatte (61) und mindestens eine auf der Leiterplatte (61) angeordnete Lichtquelle (62), insbesondere eine LED (63), aufweist.

14. Elektrisches Installationsgerät (10) nach Anspruch 12 oder 13, **dadurch gekennzeichnet, dass** an dem Beleuchtungselement (60) eine Aufnahmeöffnung (65) ausgebildet ist, in welcher ein an dem Lichtleitrahmen (52) ausgebildeter Aufnahmestift (54) aufnehmbar ist oder dass an dem Lichtleitrahmen (52) ein Aufnahmeöffnung ausgebildet ist, in welcher ein an dem Beleuchtungselement (60) ausgebildeter Aufnahmestift aufnehmbar ist.

15. Elektrisches Installationsgerät (10) nach einem der Ansprüche 1 bis 14, **dadurch gekennzeichnet, dass** das Lichtemissionselement (50) als Flächenleuchte ausgebildet ist.

## Claims

1. Electrical installation device (10) having a support frame (20) provided for wall mounting, a base (21) fastened to the support frame (20), a receiving cup (40) placed in front of the support frame (20), a light emitting element (50) received in or on the receiving cup (40), and with a frame (70) which covers the light emitting element (50) at least partially on its surface (53) facing away from the receiving cup (40), the receiving cup (40) having a light-transmitting area in order to enable backlighting of the electrical installation device (10), wherein a first contact zone (39) of a transmission element (30) is electrically conductively contacted or contactable, and wherein the transmission element (30) is electrically conductively connected with a second contact zone (38) to the light emitting element (50), **characterized in in that** the transmission element (30) is fastened to the support frame (20), the transmission element (30) having a first component section and a second component section, the support frame (20) being accommodated between the first component section and the second component section of the transmission element (30).

2. Electrical installation device (10) according to claim 1, **characterized in that** the base (21) is electrically connected to the transmission element (30) by means of preferably flexible current conducting elements and **in that** the transmission element (30) is electrically connected to the light emitting element (50) by means of preferably rigid current conducting elements or **in that** a preferably flexible current conducting element is inserted or can be inserted into the base (21) and is directly or indirectly connected to the transmission element (30).

3. Electrical installation device (10) according to claim 1 or 2, **characterized in that** the transmission element (30) comprises a support plate (31) as a first component section and a holding element (32) as a second component section, with which the transmission element (30) can be positively connected to the support frame (20), the support frame (20) being positively or nonpositively received between the holding element (32) and the support plate (31) of the transmission element (30).

4. Electrical installation device (10) according to one of claims 1 to 3, **characterized in that** the transmission element (30) has contacting elements (37) which comprise the first contact zone (39) and the second contact zone (38), a transition region between the first contact zone (39) and the second contact zone (38) being sheathed by an electrically non-conductive insulating material (34).

5. Electrical installation device (10) according to claim 4, **characterized in that** the first contact zone (39) is adapted to form a crimp connection.

6. Electrical installation device (10) according to claim 4 or 5, **characterized in that** the second contact zone (39) is arranged in a recess (36) of the insulating material (34), the second contact zone (39) being set back relative to a surface of the insulating material (34).

7. Electrical installation device (10) according to claim 3 and claim 4, **characterized in that** an opening (33) is provided on the holding element (32) and a dome (35) is provided on the insulating material (34), the dome (35) being positively received in the opening (33).

8. Electrical installation device (10) according to one of claims 4 to 7, wherein electrical transmission contacts (66) are provided on the light emitting element (50), which are electrically conductively connected to the second contact zone (39) of the transmission element (30).

9. Electrical installation device (10) according to any one of claims 1 to 8, **characterized in that** the base (20) is connected to the transmission element (30) via a flexible cable (23).

10. Electrical installation device (10) according to claim 9, **characterized in that** the flexible cable (23) comprises a first cable section (24) and a second cable section (25), wherein an electrical resistance component (26) for limiting the current intensity (I) is arranged between the first cable section (24) and the second cable section (25).

11. Electrical installation device (10) according to claim 10, **characterized in that** the electrical resistance component (26) has an electrical resistance (R) of at least 65 kiloohms.

12. Electrical installation device (10) according to one of claims 1 to 11, **characterized in that** the light emitting element (50) comprises a light guide frame (52) and an illumination element (60).

13. Electrical installation device (10) according to claim 12, **characterized in that** the illumination element (60) comprises a circuit board (61) and at least one light source (62), in particular an LED (63), arranged on the circuit board (61).

14. Electrical installation device (10) according to claim 12 or 13, **characterized in that** a receiving aperture (65) is provided on the illumination element (60), in which a receiving pin (54) provided on the light guide frame (52) can be received, or **in that** a receiving aperture is formed on the light guide frame (52), in which a receiving pin provided on the illumination element (60) can be received.

15. Electrical installation device (10) according to one of claims 1 to 14, **characterized in that** the light emitting element (50) is designed as a panel light.

## Revendications

1. Appareil d'installation électrique (10) avec un cadre de support (20) prévu pour le montage mural, un socle (21) fixé au cadre de support (20), une coque de réception (40) placée devant le cadre de support (20), un élément d'émission de lumière (50) logé dans ou sur la coque de réception (40), ainsi qu'avec un cadre (70) qui recouvre au moins partiellement l'élément d'émission de lumière (50) sur sa surface (53) opposée à la coque de réception (40), la coque de réception (40) présentant une zone transparente à la lumière afin de permettre un éclairage par l'arrière de l'appareil d'installation électrique (10), une première zone de contact (39) d'un élément de transmission (30) étant en contact ou pouvant être en contact de manière électroconductrice, et l'élément de transmission (30) étant relié par une deuxième zone de contact (38) de manière électroconductrice à l'élément d'émission de lumière (50), **caractérisé en ce que en ce que** l'élément de transmission (30) est fixé au cadre de support (20), l'élément de transmission (30) présentant une première section de composant et une deuxième section de composant, le cadre de support (20) étant reçu entre la première section de composant et la deuxième section de composant de l'élément de transmission (30).

2. Appareil d'installation électrique (10) selon la revendication 1, **caractérisé en ce que** le socle (21) est relié électriquement à l'élément de transmission (30) au moyen d'éléments de guidage de courant de préférence flexibles et **en ce que** l'élément de transmission (30) est relié électriquement à l'élément d'émission de lumière (50) au moyen d'éléments de guidage de courant de préférence rigides ou **en ce qu'**un élément de guidage de courant de préférence flexible est introduit ou peut être introduit dans le socle (21) et est relié directement ou indirectement à l'élément de transmission (30).

3. Appareil d'installation électrique (10) selon la revendication 1 ou 2, **caractérisé en ce que** l'élément de transmission (30) comprend comme première section de composant une plaque de support (31) et comme deuxième section de composant un élément de retenue (32), avec lesquels l'élément de transmission (30) peut être relié par complémentarité de forme au cadre de support (20), le cadre de support (20) étant reçu par complémentarité de forme ou par force entre l'élément de retenue (32) et la plaque de support (31) de l'élément de transmission (30).

4. Appareil d'installation électrique (10) selon l'une des revendications 1 à 3, **caractérisé en ce que** l'élément de transmission (30) comporte des éléments de contact (37) qui présentent la première zone de contact (39) et la deuxième zone de contact (38), une zone de transition entre la première zone de contact (39) et la deuxième zone de contact (38) étant enveloppée par un matériel isolant (34) non conducteur électrique.

5. Appareil d'installation électrique (10) selon la revendication 4, **caractérisé en ce que** la première zone de contact (39) est conçue pour former une connexion par sertissage.

6. Appareil d'installation électrique (10) selon la revendication 4 ou 5, **caractérisé en ce que** la deuxième zone de contact (39) est disposée dans un évidement (36) du matériau isolant (34), la deuxième zone de contact (39) étant en retrait par rapport à une surface du matériau isolant (34).

7. Appareil d'installation électrique (10) selon la revendication 3 et la revendication 4, **caractérisé en ce qu'**une ouverture (33) est formée sur l'élément de retenue (32) et un dôme (35) est formé sur le matériel isolant (34), le dôme (35) étant logé par complémentarité de forme dans l'ouverture (33).

8. Appareil d'installation électrique (10) selon l'une des revendications 4 à 7, dans lequel des contacts de transmission électrique (66) sont formés sur l'élément d'émission de lumière (50), lesquels sont reliés de manière électriquement conductrice à la deuxième zone de contact (39) de l'élément de transmission (30).

9. Appareil d'installation électrique (10) selon l'une des revendications 1 à 8, **caractérisé en ce que** le socle (20) est relié à l'élément de transmission (30) par un câble flexible (23).

10. Appareil d'installation électrique (10) selon la revendication 9, **caractérisé en ce que** le câble flexible (23) comporte un premier tronçon de câble (24) et un deuxième tronçon de câble (25), un composant de résistance électrique (26) destiné à limiter l'intensité du courant (I) étant disposé entre le premier tronçon de câble (24) et le deuxième tronçon de câble (25).

11. Appareil d'installation électrique (10) selon la revendication 10, **caractérisé en ce que** le composant de résistance électrique (26) présente une résistance électrique (R) d'au moins 65 kiloohms.

12. Appareil d'installation électrique (10) selon l'une des revendications 1 à 11, **caractérisé en ce que** l'élément d'émission de lumière (50) comprend un cadre de guidage de lumière (52) et un élément d'éclairage (60).

13. Appareil d'installation électrique (10) selon la revendication 12, **caractérisé en ce que** l'élément d'éclairage (60) comprend une carte de circuit (61) et au moins une source lumineuse (62), notamment une LED (63), disposée sur la carte de circuit (61).

14. Appareil d'installation électrique (10) selon la revendication 12 ou 13, **caractérisé en ce qu'**une ouverture de réception (65) est formée sur l'élément d'éclairage (60), dans laquelle une broche de réception (54) formée sur le cadre de guidage de lumière (52) peut être reçue ou **en ce qu'**une ouverture de réception est formée sur le cadre de guidage de lumière (52), dans laquelle une broche de réception formée sur l'élément d'éclairage (60) peut être reçue.

15. Appareil d'installation électrique (10) selon l'une des revendications 1 à 14, **caractérisé en ce que** l'élément d'émission de lumière (50) est réalisé sous la forme d'une lampe de surface.
